# EUROPÄISCHE PATENTANMELDUNG

(11) **EP 4 653 149 A1**
(43) Veröffentlichungstag der Anmeldung: **26.11.2025**
(21) Anmeldenummer: 24178020.4
(22) Anmeldetag: 24.05.2024
(51) Int. Cl.: B25J 9/16, G05B 19/404

(54) **BETREIBEN EINES SYSTEMS MIT MEHREREN KÖRPERELEMENTEN**

(71) Anmelder: Siemens Aktiengesellschaft, 80333 München (DE)
(72) Erfinder: Bitterolf, David, 91056 Erlangen (DE); Puchtler, Thomas, 91325 Adelsdorf (DE); Tauchmann, Sven, 09127 Chemnitz (DE)
(74) Vertreter: Siemens Patent Attorneys

(57) **Zusammenfassung**

Die Erfindung betrifft ein Verfahren zum Betreiben eines Systems (10) mit mehreren Körperelementen (20), die bewegbar miteinander verbunden sind, wobei wenigstens ein erstes der Körperelemente (20) mittels einer ersten Antriebseinheit (18) bewegt wird, die das wenigstens eine erste Körperelement (20) abhängig von einem ersten Antriebssignal einer Steuereinheit (12) bewegt, wobei die Steuereinheit (12) ausgehend von einem ersten Zustand des ersten Körperelements (20) einen zweiten Zustand des ersten Körperelements (20) bestimmt, den erste Körperelement (20) während eines Bewegungstakts (26) erreichen soll, wobei die Steuereinheit (12) das erste Antriebssignal basierend auf einem Körperelementmodell (24) für das erste Körperelement (20) ermittelt, um das erste Körperelement (20) mittels der ersten Antriebseinheit (18) während des Bewegungstakts (26) vom ersten Zustand in den zweiten Zustand zu bewegen. Erfindungsgemäß wird das Körperelementmodell (24) abhängig von einer mechanischen Belastung des ersten Körperelements (20) in dem jeweiligen Bewegungstakt (26) aktualisiert.

## Beschreibung

Die Erfindung betrifft ein Verfahren zum Betreiben eines Systems mit mehreren Körperelementen, die bewegbar miteinander verbunden sind, wobei wenigstens ein erstes der Körperelemente mittels einer ersten Antriebseinheit bewegt wird, die das wenigstens eine erste Körperelement abhängig von einem ersten Antriebssignal einer Steuereinheit bewegt, wobei die Steuereinheit ausgehend von einem ersten Zustand des ersten Körperelements einen zweiten Zustand des ersten Körperelements bestimmt, den erste Körperelement während eines Bewegungstakts erreichen soll, wobei die Steuereinheit das erste Antriebssignal basierend auf einem Körperelementmodell für das erste Körperelement ermittelt, um das erste Körperelement mittels der ersten Antriebseinheit während des Bewegungstakts vom ersten Zustand in den zweiten Zustand zu bewegen. Weiterhin betrifft die Erfindung eine Steuereinheit zum Betreiben eines Systems mit mehreren Körperelementen, die bewegbar miteinander verbunden sind, wobei wenigstens ein erstes der Körperelemente mittels einer ersten Antriebseinheit bewegbar ist, wobei die Steuereinheit ausgebildet ist, das wenigstens zum Bewegen des ersten Körperelements des Systems ein erstes Antriebssignal bereitzustellen, wobei die Steuereinheit ausgebildet ist, ausgehend von einem ersten Zustand des ersten Körperelements einen zweiten Zustand des ersten Körperelements zu bestimmen, den erste Körperelement während eines Bewegungstakts erreichen soll, wobei die Steuereinheit ausgebildet ist, das erste Antriebssignal basierend auf einem Körperelementmodell für das erste Körperelement zu ermitteln, um das erste Körperelement mittels der ersten Antriebseinheit während des Bewegungstakts vom ersten Zustand in den zweiten Zustand zu bewegen. Schließlich betrifft die Erfindung auch ein System mit mehreren Körperelementen, die bewegbar miteinander verbunden sind, und der Steuereinheit zumindest zum Bereitstellen eines ersten Antriebssignals, wobei wenigstens ein erstes der Körperelemente mittels einer ersten Antriebseinheit bewegbar ist, die das erste Körperelement abhängig vom ersten Antriebssignal der Steuereinheit bewegt.

Gattungsgemäße Verfahren, gattungsgemäße Steuereinheiten sowie auch gattungsgemäße Systeme sind im Stand der Technik umfänglich bekannt. Ein System mit mehreren Körperelementen kann zum Beispiel durch eine Werkzeugmaschine, einen Roboter, Kombinationen hiervon und/oder dergleichen gebildet sein. Ein Körperelement kann daher insbesondere ein Maschinenelement des Systems, insbesondere einer Maschine sein. Die Körperelemente können über Gelenke miteinander verbunden sein, wobei wenigstens eines der Gelenke eine Antriebseinheit aufweisen kann. Die Antriebseinheit kann beispielsweise eine elektrische, pneumatische und/oder hydraulische Maschine aufweisen.

Zur Bewegungsführung eines jeweiligen bewegbaren Körperelements beziehungsweise Maschinenelements des Systems, insbesondere der Maschine, ist es üblich, eine oder mehrere Führungssollgrößen mittels einem Sollwertgenerator und/oder einer Steuereinheit bereitzustellen, wie zum Beispiel eine Solllage, eine Sollgeschwindigkeit, eine Sollbeschleunigung, eine Sollausrichtung und/oder dergleichen. Basierend auf wenigstens einer Führungssollgröße wird die wenigstens eine der Antriebseinheiten betrieben, um eine Bewegung des jeweiligen Maschinenelements in vorgebbarer Weise durchführen zu können. Gattungsgemäße Sollwertgeneratoren beziehungsweise Steuereinheiten stellen die wenigstens eine Führungssollgröße vorzugsweise derart bereit, dass bei einer Bewegung des wenigstens einen Körperelements zulässige Grenzwerte, insbesondere in Bezug auf eine mechanische Belastung, nicht überschritten werden. Darüber hinaus können seitens des Sollwertgenerators beziehungsweise der Steuereinheit Maßnahmen vorgesehen sein, um kritische Eigenfrequenzen während der Bewegung des Körperelements zu vermeiden. Diese Maßnahmen, beispielsweise ein tiefpassgefiltertes Antriebsignal oder dergleichen können jedoch teilweise zu Einbußen in Bezug auf eine Dynamik des Bewegungsvorgangs des bewegbaren Körperelements führen. Das Körperelement kann zum Beispiel eine Achse eines Roboters, eine Vorschubachse einer Werkzeugmaschine oder dergleichen sein.

Eine derartige Maßnahme ist zum Beispiel eine sogenannte Ruckbegrenzung. Hierbei wird beispielsweise eine Änderung einer Beschleunigung des jeweiligen Körperelements, das heißt, ein Ruck, entsprechend eines vorgegebenen Profils bestimmt oder durch einen vorgegebenen Grenzwert begrenzt. Bei Werkzeugmaschinen ist es somit beispielsweise möglich, eine Bahngeschwindigkeit der durch ein jeweiliges Körperelement durchzuführenden Bewegung soweit zu reduzieren, dass sämtliche Ruckbegrenzungen der Körperelemente eingehalten werden.

Eine gezielte Anpassung an ein jeweiliges Schwingungsverhalten ist insbesondere bei Werkzeugmaschinenanwendungen jedoch nur sehr eingeschränkt möglich. Für eine große Fertigungsgenauigkeit ist daher beispielsweise ein jeweiliger Ruck stark zu reduzieren, sodass die Dynamik erheblich eingeschränkt wird, woraus sich hohe Fertigungskosten ergeben können. In diesem Zusammenhang offenbart die DE 10 2005 048 390 A1 ein Verfahren und eine Einrichtung zur Bewegungsführung eines bewegbaren Maschinenelements einer Maschine. Darüber hinaus offenbart die EP 2 954 986 A1 eine Vorrichtung und ein Verfahren zum Steuern und Regeln eines Mehrkörpersystems.

Das Körperelementmodell ist eine, vorzugsweise digitale, Nachbildung des jeweiligen Körperelements des Systems. Das Körperelementmodell kann ein Teil eines Systemmodells sein, welches eine Gesamtheit des Systems abzubilden vermag. Das Körperelementmodell kann Daten in Bezug auf Abmessungen des Körperelements, eine Elastizität des Körperelements, eine Masse beziehungsweise eine Massenverteilung des Körperelements, einen Schwerpunkt des Körperelements und/oder dergleichen enthalten. Das Körperelementmodell enthält vorzugsweise sämtliche Daten von Eigenschaften des zugeordneten Körperelements, die für die bestimmungsgemäße Nutzung, insbesondere die vorgesehene Bewegung des Körperelements, relevant sind. Ein Zustand des Körperelements kann beispielsweise eine Lage des Körperelements beziehungsweise eine Position des Körperelements, eine Ausrichtung des Körperelements im Raum, eine Bewegung des Körperelements und/oder dergleichen sein. Mithilfe des Körperelementmodells kann die Steuereinheit das Antriebssignal für die Antriebseinheit in geeigneter Weise bereitstellen, sodass das Körperelement in einem Bewegungstakt vom ersten Zustand in den zweiten Zustand bewegt werden kann. Der Bewegungstakt ist insbesondere ein, vorzugsweise kurzer, Zeitraum, in dem das Antriebssignal mit einem im Wesentlichen konstanten Wert durch die Steuereinheit bereitgestellt werden kann. Der Bewegungstakt kann zum Beispiel einige wenige Millisekunden aufweisen. Vorzugsweise ist der Bewegungstakt jedoch kürzer als 1 ms und kann zum Beispiel einen Zeitraum von etwa 10 µs bis etwa 500 µs, vorzugsweise einen Bereich von etwa 100 µs bis etwa 200 µs, umfassen.

In Realisierungen des Stands der Technik, wie zum Beispiel der DE 10 2005 048 390 A1, wird für die Durchführung der Lehre angenommen, dass das Körperelement während er Bewegung beziehungsweise während des bestimmungsgemäßen Betriebs des Systems im Wesentlichen nicht verändert wird, also im Wesentlichen zeitinvariant ist. Daher ist ebenso das Körperelementmodell im Wesentlichen zeitinvariant. Dies erlaubt es, mit einem geringen Aufwand eine Verfahrensführung auch bei einer Vielzahl von Körperelementen im Wesentlichen zeitgleich realisieren zu können. Insbesondere kann beispielsweise eine Vielzahl von Vorschubachsen als Körperelemente des Systems beziehungsweise der Maschine entsprechend angesteuert werden. Dadurch ist es möglich, dass das Systemmodell, insbesondere das Körperelementmodell, beziehungsweise ein entsprechender Zustandsreglerentwurf vom bestimmungsgemäßen Betrieb vollständig losgelöst sein kann. Das Systemmodell beziehungsweise das Körperelementmodell kann somit außerhalb des bestimmungsgemäßen Betriebs des Systems beziehungsweise der Maschine realisiert sein. Das Systemmodell beziehungsweise das Körperelementmodell kann auch in einer Arbeitsebene realisiert sein, die vom Betrieb des Systems beziehungsweise der Maschine separierbar ist. Das Systemmodell beziehungsweise das Körperelementmodell weist vorzugsweise Parameter beziehungsweise Koeffizienten auf, die für ein Bestimmen von Sollwerten herangezogen werden können. Dadurch brauchen im Stand der Technik lediglich Kanäle für die Sollwerte von der Steuereinheit zyklisch für einen jeweiligen Bewegungstakt ermittelt werden, auf deren Basis für den jeweiligen Bewegungstrakt dann das Antriebssignal bestimmt werden kann.

Dabei zeigt sich als technisches Problem, dass die vorgenannte Verfahrensführung aufgrund der dort genannten Randbedingungen, insbesondere in Bezug auf das zeitinvariante Körperelementmodell, an Körperelementen wie zum Beispiel Vorschubachsen nicht oder nur unzureichend angewendet werden kann, deren Verhalten zumindest teilweise positions- und/oder belastungsabhängig beziehungsweise beladungsabhängig variiert. Diese Problematik tritt unter anderem zum Beispiel bei Werkstückachsen von Werkzeugmaschinen oder auch bei Roboterachsen auf. So hat zum Beispiel bei einem Roboter sowohl eine Pose als auch eine Beladung wie zum Beispiel eine Last an einem Roboterflansch beziehungsweise eine mechanische Belastung unter Umständen einen nicht unerheblichen Einfluss auf eine Dynamik einer jeweiligen Achse beziehungsweise eines jeweiligen Körperelements des Roboters.

Im Stand der Technik wird versucht, mit einem spezifischen invarianten Systemmodell eines Systems möglichst viele der vorgenannten Zustände beziehungsweise Zustandsänderungen eines jeweiligen Körperelements abzudecken. Dadurch ist eine entsprechende Genauigkeit hinsichtlich der Bewegungsführung jedoch nur in einem einzigen Betriebspunkt beziehungsweise Arbeitspunkt erreichbar. In abweichenden Betriebspunkten sind entsprechende Bewegungsabweichungen die Folge. Somit kann zum Beispiel bei einer Werkzeugmaschine beziehungsweise bei einem Roboter lediglich eine begrenzte Konturgenauigkeit erreicht werden, wenn von einem jeweiligen Arbeitspunkt abgewichen wird. Dadurch kann zum Beispiel die Genauigkeit des Roboters im gesamten Arbeitsraum des Roboters eingeschränkt sein.

Der Erfindung liegt somit die Aufgabe zugrunde, ein Verfahren, eine Steuereinheit sowie ein System der gattungsgemäßen Art dahingehend zu verbessern, dass Bewegungsabweichungen aufgrund einer mechanischen Belastung eines jeweiligen Körperelements des Systems reduziert werden können.

Als Lösung werden mit der Erfindung ein Verfahren, eine Steuereinheit und ein System gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass das Körperelementmodell abhängig von einer mechanischen Belastung des ersten Körperelements in dem jeweiligen Bewegungstakt aktualisiert wird.

In Bezug auf eine gattungsgemäße Steuereinheit wird mit der Erfindung insbesondere vorgeschlagen, dass die Steuereinheit ausgebildet ist, das Körperelementmodell abhängig von einer mechanischen Belastung des ersten Körperelements in dem jeweiligen Bewegungstakt zu aktualisieren.

In Bezug auf ein gattungsgemäßes System wird mit der Erfindung insbesondere vorgeschlagen, dass die Steuereinheit gemäß der Erfindung ausgebildet ist.

Die Erfindung basiert unter anderem auf dem Gedanken, dass das Körperelementmodell eines jeweiligen der Körperelemente als Teil des bestimmungsgemäßen Betriebs berücksichtigt wird. Beispielsweise kann ein Grundmodell einer Achse beziehungsweise einer Anlage hinterlegt und mitgeführt werden. Darunter kann fallen, dass das Körperelementmodell in Echtzeit für eine jeweilige aktuelle Pose beziehungsweise einen jeweiligen aktuellen Zustand neu bestimmt wird. Das Körperelementmodell kann vorzugsweise um eine mechanische Belastung des jeweiligen Körperelements beziehungsweise einer entsprechenden Kinematik erweitert werden. Die Eigenschaften einer solchen mechanischen Belastung wie zum Beispiel eine Last an einem Roboterflansch können zum Beispiel von einem Nutzer des Systems vorgegeben oder auch von der Steuereinheit selbsttätig ermittelt werden, beispielweise indem Sensorsignale ausgewertet werden. Die mechanische Belastung kann insbesondere eine sich ändernde Masse und/oder eine sich ändernde Trägheit aufgrund einer geänderten Pose oder einer geänderten Beladung eines Körperelements sein. Die mechanische Belastung kann zum Beispiel eine Pose einer Achse eines Roboters, die Posen aller Achsen des Roboters, insbesondere in Bezug auf eine Kinematik, sein. Die mechanische Belastung eines Körperelements kann abhängig von einer mechanischen Belastung von weiteren Körperelementen sein, die mit dem Körperelement über eine mechanische Schnittstelle, wie zum Beispiel einem Gelenk, einer Verschraubung und/oder dergleichen, verbunden sind, auch wenn sich die Pose des Körperelements selbst oder seine Position nicht ändert. So kann sich beispielsweise das Modell für das Körperelement ändern, auch wenn es nicht bewegt wird, insbesondere wenn die Körperelemente beziehungsweise Achsen seriell angeordnet sind, weil auch eine Änderung anderer Posen Auswirkung auf das jeweilige Körperelement beziehungsweise die jeweilige Achse hat. Dies kann zum Beispiel durch eine Beladung am Flansch oder dergleichen erfolgen. Durch diese Maßnahme ist es möglich, dass die Steuereinheit das Antriebssignal, insbesondere das erste Antriebssignal für die erste Antriebseinheit, präziser beziehungsweise angepasster ermitteln kann, sodass unerwünschte Abweichungen bei der Bewegung des Körperelements vom ersten Zustand in den zweiten Zustand reduziert werden können. So kann die Steuereinheit zum Beispiel bei einer elektrischen Maschine als Antriebseinheit durch eine Strommessung bestimmen, dass ein Roboterarm einen Körper mit einer vorgegebenen Masse gekoppelt hat. Dies kann sich auf das Körperelementmodell auswirken, beispielsweise in dem sich das Körperelement aufgrund der Masse durch den Körper ergänzend verformt, und dies im Körperelementmodell des jeweiligen Körperelements berücksichtigen. Dadurch kann die Bereitstellung des jeweiligen Antriebssignals für die jeweilige Antriebseinheit präziser werden. Die im Stand der Technik auftretenden Nachteile können somit reduziert werden.

Das Antriebssignal kann zum Beispiel ein einzelnes Signal sein. Es kann beispielsweise aber auch mehrere Teilsignale aufweisen, die gemeinsam das Antriebssignal bilden können. Das Antriebssignal ist vorzugsweise ein analoges oder digitales elektrisches Signal. Abhängig von der Antriebseinheit kann das Antriebssignal jedoch dem Grunde nach zumindest teilweise auch zum Beispiel ein pneumatisches oder ein hydraulisches Signal sein. Auch eine Kombination der vorgenannten Optionen kann vorgesehen sein.

Die Antriebseinheit kann vorzugsweise eine elektrische, pneumatische oder hydraulische Antriebseinheit sein. Die Antriebseinheit kann eine oder mehrere Antriebsmaschinen aufweisen. Das Antriebssignal beziehungsweise das Teilsignal wird vorzugsweise passend für die jeweilige Antriebsmaschine bereitgestellt.

In Bezug auf einen Roboter kann darüber hinaus erreicht werden, dass, zum Beispiel in einem vorgegebenen Arbeitsraum, eine deutliche Steigerung seines Rucks bei reduzierter Schwingungsneigung und höherer Konturgenauigkeit erreicht werden kann. Dieser Vorteil wird nicht nur in einem bestimmten Arbeitspunkt erreicht, sondern auch in einem Bereich von unterschiedlichen Arbeitspunkten, wie zuvor erläutert.

Der Bewegungstakt kann beispielsweise ein Teil einer Bewegung des Körperelements sein. Der Bewegungstakt kann einen vorgegebenen Zeitabschnitt der Bewegung oder auch eine vorgebbare Teilstrecke einer Strecke, die im Rahmen der Bewegung zurückgelegt werden soll, umfassen. Insbesondere kann vorgesehen sein, dass eine vorgegebene Bewegung für das System, insbesondere für wenigstens eines der Körperelemente des Systems, in eine Mehrzahl von Teilbewegungen aufgeteilt wird, die nacheinander ausgeführt werden. Vorzugsweise kann eine jeweilige Teilbewegung während eines Bewegungstakts realisiert werden. Dadurch ist es möglich, eine Bewegung des Systems, beziehungsweise des Körperelements, zu diskretisieren. Die Bewegung kann somit beispielsweise durch eine Aufeinanderfolge von Bewegungstakten realisiert sein. Vorzugsweise ist vorgesehen, dass die Bewegungstakte im Wesentlichen eine gleiche zeitliche Erstreckung aufweisen. Es kann aber auch vorgesehen sein, dass zumindest einige der Bewegungstakte eine voneinander unterschiedliche zeitliche Erstreckung aufweisen. Die zeitliche Erstreckung eines Bewegungstakts kann durch die Steuereinheit vorgegeben werden. Die zeitliche Erstreckung eines jeweiligen Bewegungstakts kann die Steuereinheit zum Beispiel anhand einer Bewegungsart oder dergleichen bestimmen.

Die Steuereinheit bestimmt vorzugsweise für jeden Bewegungstakt jeweils einen jeweiligen ersten und einen jeweiligen zweiten Zustand, zum Beispiel einen jeweiligen Anfangszustand und einen jeweiligen Endzustand für das jeweilige Körperelement. Der Zustand kann zum Beispiel eine Position, eine Ausrichtung, eine Geschwindigkeit, eine Beschleunigung und/oder dergleichen des jeweiligen Körperelements sein. Der Zustand kann zum Beispiel auch abhängig von einer Pose des Systems sein, insbesondere wenn das System einen Roboter aufweist.

Es wird gemäß einer Weiterbildung vorgeschlagen, dass das Körperelementmodell auf dominante Eigenschaften beziehungsweise Parameter des jeweiligen Körperelements reduziert wird. Vorzugsweise können einzelne Körperelemente entkoppelt voneinander bearbeitet werden. Dadurch ist es möglich, das Körperelementmodell spezifisch für ein jeweiliges Körperelement zu realisieren, wobei das jeweilige Körperelementmodell im Wesentlichen nur die Daten beziehungsweise Parameter des jeweiligen Körperelements zu berücksichtigen braucht. Dadurch ist es möglich, ein komplexes Systemmodell des Gesamtsystems und dessen aufwändige Verarbeitung im Rahmen einer Aktualisierung zu vermeiden.

Gemäß einer Weiterbildung wird vorgeschlagen, dass das Körperelementmodell für jeden Bewegungstakt oder jeweils einem Vielfachen des Bewegungstakts aktualisiert wird. Dem Grunde nach bräuchte das Körperelementmodell nicht für jeden Bewegungstakt aktualisiert zu werden, insbesondere wenn sich eine mechanische Belastung des jeweiligen Körperelements in dem jeweiligen Bewegungstakt im Wesentlichen nicht ändert. Gleichwohl kann es vorteilhaft sein, für jeden Bewegungstakt das Körperelementmodell entsprechend zu aktualisieren, um beispielsweise Belastungsänderungen oder zufällige Einwirkungen besser berücksichtigen zu können. Das Vielfache des Bewegungstakts ist vorzugsweise ein ganzzahliges Vielfaches des Bewegungstakts. Es kann vorgesehen sein, dass eine Aktualisierung zum Beispiel bei jedem dritten, bei jedem fünften oder bei jedem 10 Bewegungstakt erfolgt. Diese Option eignet sich besonders bei begrenzten Verarbeitungskapazitäten in Bezug auf die Aktualisierung des Modells. Dadurch kann die erfindungsgemäße Verfahrensführung weiter verbessert werden.

Es wird ferner vorgeschlagen, dass das erste Antriebssignal für einen jeweiligen Bewegungstakt abhängig von dem jeweils für diesen Bewegungstakt aktualisierten Körperelementmodell ermittelt wird. Dies hat den Vorteil, dass eine hohe Anpassungsgeschwindigkeit bei Änderungen des Körperelementmodells des jeweiligen Körperelements besser berücksichtigt werden kann. Eine weitere Verbesserung der Verfahrensführung kann erreicht werden.

Weiterhin wird vorgeschlagen, dass die mechanische Belastung abhängig von einer Kraftwirkung eines zweiten der Körperelemente bestimmt wird, welches unmittelbar mit dem ersten Körperelement mechanisch gekoppelt ist. Diese Weiterbildung hat den Vorteil, dass insbesondere bei einer starken Wechselwirkung beziehungsweise einer starken Überkopplung zwischen zwei miteinander unmittelbar gekoppelten Körperelementen auch das zweite Körperelement bei der Bestimmung des Antriebssignals berücksichtigt werden kann. Vorzugsweise ist vorgesehen, dass eine derartige Verfahrensführung paarweise für jeweilige Körperelementpaare durchgeführt wird. Dadurch kann weiterhin eine günstige und schnelle Verfahrensführung auch bei komplexen Verfahrensführungen realisiert werden. Besonders vorteilhaft kann diese Weiterbildung auf eine Kopplung zwischen einer zweiten und einer dritten Achse eines Roboters angewendet werden.

Besonders vorteilhaft erweist es sich, wenn das zweite Körperelement mittels einer zweiten Antriebseinheit bewegt wird, die das zweite Körperelement abhängig von einem zweiten Antriebsignal der Steuereinheit bewegt. Dadurch ist es möglich, zusammengesetzte Bewegungen von zwei Körperelementen des Systems zu erfassen.

Ferner wird vorgeschlagen, dass die mechanische Belastung zumindest abhängig von wenigstens einer Beschleunigung des wenigstens einen Körperelements, einer Masse des wenigstens einen Körperelements, einem Schwerpunkt des wenigstens einen Körperelements, einer Steifigkeit des wenigstens einen Körperelements, wenigstens einer Pose des wenigstens einen Körperelements in Verbindung mit wenigstens einem weiteren Körperelement oder wenigstens einer Kraft, die aufgrund einer Kopplung mit einem weiteren Körperelement auf das wenigstens eine Körperelement einwirkt, bestimmt wird. Natürlich können die vorgenannten Parameter in nahezu beliebiger Weise kombiniert sein, um die mechanische Belastung zu bestimmen. Darüber hinaus können natürlich auch noch weitere Parameter berücksichtigt werden, beispielsweise eine Temperatur des jeweiligen Körperelements oder dergleichen.

Darüber hinaus wird vorgeschlagen, dass ein Übergang vom ersten Zustand in den zweiten Zustand während des Bewegungstakts zumindest teilweise mittels einer Trajektorie vorgegeben wird, wobei die Steuereinheit das Antriebsignal ergänzend zumindest abhängig von Trajektorie ermittelt. Die Trajektorie kann einen Bewegungsablauf des Körperelements oder auch von mehreren Körperelementen des Systems sein, der sich zumindest über einen Bewegungstakt erstrecken kann. Die Trajektorie kann sich darüber hinaus auch über mehrere Bewegungstakte erstrecken. Beispielsweise kann die Trajektorie ein Bewegungsablauf eines Endes eines Roboterarms sein, an dem zum Beispiel ein Greifer zum Greifen eines Objekts angeordnet ist. Die Trajektorie kann zumindest teilweise wenigstens eine geradlinige, gekrümmte Bewegung, oder auch eine Drehung umfassen. Die Trajektorie kann eine Bewegung eines Schwerpunktes eines jeweiligen Körperelements darstellen. Die Trajektorie kann aber auch eine Bewegung eines Endes des Körperelements darstellen, welches mit einem weiteren Körperelement mechanisch gekoppelt ist.

Besonders vorteilhaft erweist es sich, wenn das Verfahren für einen jeweiligen Bewegungstakt für wenigstens zwei Körperelemente des Systems durchgeführt wird. Dadurch ist es möglich, eine Bewegung zumindest teilweise des Systems in erfindungsgemäßer Weise zu realisieren.

Unabhängig vom grammatikalischen Geschlecht eines bestimmten Begriffes sind Personen mit männlicher, weiblicher oder anderer Geschlechteridentität mit umfasst.
FIG 1 eine schematische Blockdarstellung einer modellbasierten Vorsteuerung und Regelkreisen,
FIG 2 eine schematische Blockdarstellung einer Umsetzung der modellbasierten Vorsteuerung gemäß FIG 1 für eine CNC-Steuerung,
FIG 3 eine schematische Diagrammdarstellung eines Amplitudenverlaufs abhängig von der Frequenz für die CNC-Steuerung gemäß FIG 2,
FIG 4 eine schematische Diagrammdarstellung eines Phasenverlaufs abhängig von der Frequenz für die CNC-Steuerung gemäß FIG 2,
FIG 5 eine schematische Diagrammdarstellung einer Sollkontur gegenüber einer Ist-Kontur für die CNC-Steuerung gemäß FIG 2,
FIG 6 eine schematische Diagrammdarstellung eines Amplitudenverlaufs abhängig von der Frequenz wie FIG 3 für die CNC-Steuerung gemäß FIG 2 mit einer Tiefpassfilterung in Verbindung mit einem gleitenden Mittelwert,
FIG 7 eine schematische Diagrammdarstellung eines Phasenverlaufs abhängig von der Frequenz wie FIG 4 für die CNC-Steuerung gemäß FIG 2 mit einer Tiefpassfilterung in Verbindung mit einem gleitenden Mittelwert,
FIG 8 eine schematische Diagrammdarstellung einer Sollkontur gegenüber einer Ist-Kontur wie FIG 5 für die CNC-Steuerung gemäß FIG 2 mit einer Tiefpassfilterung in Verbindung mit einem gleitenden Mittelwert,
FIG 9 eine schematische Diagrammdarstellung eines Amplitudenverlaufs abhängig von der Frequenz wie FIG 3 einer Drehzahlregelstrecke einer ersten Achse eines Roboters mit sechs Achsen für zwei voneinander unterschiedliche Posen,
FIG 10eine schematische Diagrammdarstellung eines Phasenverlaufs abhängig von der Frequenz wie FIG 4 der Drehzahlregelstrecke der ersten Achse des Roboters für zwei voneinander unterschiedliche Posen,
FIG 11 eine schematische Diagrammdarstellung eines Amplitudenverlaufs abhängig von der Frequenz wie FIG 9 für eine bestmögliche Abbildung eines Verhaltens der ersten Achse in allen Zuständen,
FIG 12 eine schematische Diagrammdarstellung eines Phasenverlaufs abhängig von der Frequenz wie FIG 10 für die bestmögliche Abbildung eines Verhaltens der ersten Achse in allen Zuständen,
FIG 13 eine schematische Blockdarstellung einer modellbasierten Vorsteuerung und Regelkreisen wie FIG 1, wobei Körperelementmodelle jeweiliger Körperelemente in Bewegungstakten aktualisiert werden,
FIG 14 eine schematische Diagrammdarstellung in Bezug auf ein Einnehmen von Positionen abhängig von der Zeit bei drei verschiedenen Rucken einer Roboterachse mit einer Vorsteuerung gemäß FIG 1, und
FIG 15eine schematische Diagrammdarstellung in Bezug auf ein Einnehmen von Positionen abhängig von der Zeit bei drei verschiedenen Rucken wie FIG 14 mit einer Vorsteuerung gemäß FIG 1, wobei die Körperelementmodelle der Körperelemente in den Bewegungstakten aktualisiert werden.

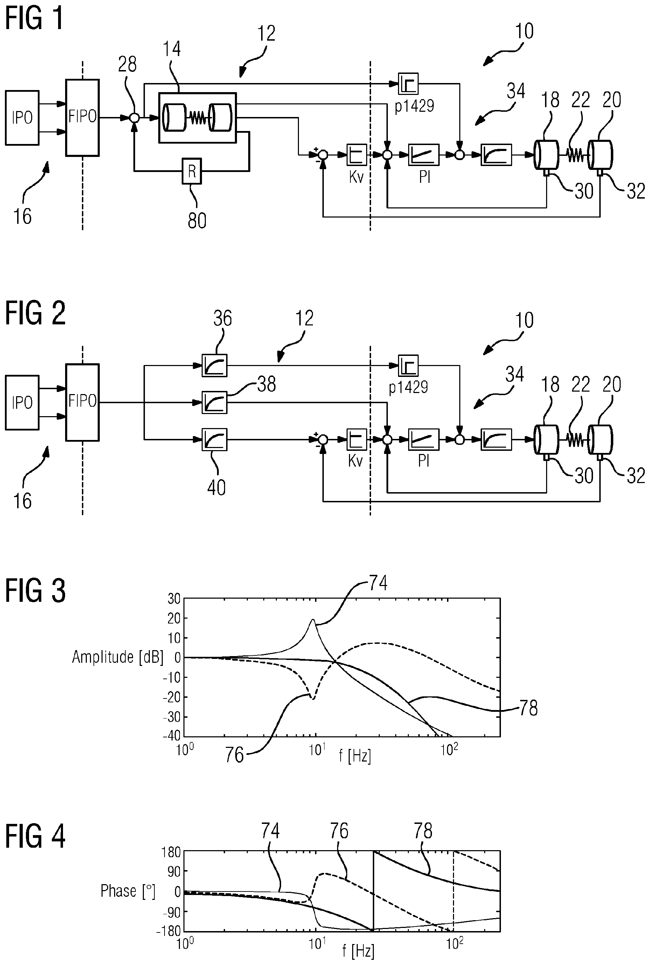

FIG 1 zeigt eine schematische Blockdarstellung einer modellbasierten Vorsteuerung und Regelkreisen nach Art eines prinzipiellen Aufbaus. Ein Sollwertgenerator 16 weist einen Interpolator und einen daran angeschlossenen Feininterpolator auf, der einen Lagesollwert bereitstellt. An den Sollwertgenerator 16 ist eine Steuereinheit 12 angeschlossen, die ein Systemmodell 14 aufweist. Das Systemmodell 14 ist über eine Zustandseinheit 80 rückgekoppelt, indem ein Ausgangssignal des Systemmodells 14 über die Zustandseinheit 80 mittels einer Verknüpfung 28 mit dem Lagesollwert des Sollwertgenerators 16 verknüpft wird und als Eingangsgröße für das Systemmodell 14 dient.

Die Steuereinheit 12 ist ferner an ein System 14 angeschlossen, welches vorliegend eine elektrische Maschine 18 als Antriebseinheit aufweist, die über eine mechanische Kopplung 22 mit einem Körperelement 20 des Systems 10 mechanisch verbunden ist. Das System 10 weist ferner eine Steuer- und Regeleinrichtung 34 auf, die dazu dient, die elektrische Maschine 18 in vorgebbarer Weise zu betreiben.

An der elektrischen Maschine 18 ist ferner ein Drehzahlsensor 30 angeordnet, der eine Drehzahl eines Läufers der als rotierende elektrische Maschine 18 ausgebildeten Antriebseinheit erfasst und für die Steuer- und Regeleinrichtung 34 zur Verfügung stellt. Darüber hinaus ist am Körperelement 20 ein Positionssensor 32 angeordnet, der ein entsprechendes Positionssignal in Abhängigkeit einer erfassten Position des Körperelements 20 für die Steuereinheit 12 bereitstellt. Die Steuereinheit 12 liefert ferner Sollwerte für die Steuer- und Regeleinrichtung 34, zum Beispiel einen Geschwindigkeitssollwert, einen Drehmomentsollwert und/oder dergleichen. Die Steuereinheit 12 stellt somit ein zustandsgeregeltes Modell der Mechanik bereit. Eine Stellgröße des Regelkreises ist vorliegend das ideale Drehmoment der elektrischen Maschine 18. Diese Stellgröße wird abgegriffen und an die Steuer- und Regeleinrichtung 34 als Drehmomentsollwert beziehungsweise Drehmomentvorsteuerwert weitergegeben. Eine simulierte Drehzahl der elektrischen Maschine 18 und eine simulierte Lage am aktiven Messsystem werden jeweils am Eingang des Drehzahlbeziehungsweise Lageregelkreises zur Symmetrierung aufgegeben.

In FIG 1 werden die modellbasierte Vorsteuerung sowie die Regelkreise digital realisiert. Der Sollwertgenerator 16 wird mit einem Takt betrieben, der eine Taktrate in einem Bereich von etwa 4 ms bis etwa 8 ms aufweist. Die Steuereinheit 12 wird dagegen zumindest teilweise mit einem Takt in einem Bereich von etwa 2 ms betrieben. Die Steuer- und Regeleinrichtung 34 wird vorliegend mit einem Takt in einem Bereich von etwa 125 µs betrieben. In alternativen Ausgestaltungen können natürlich auch abweichende Taktraten gewählt sein.

FIG 2 zeigt eine schematische Blockdarstellung einer Umsetzung der modellbasierten Vorsteuerung gemäß FIG 1 für eine CNC-Steuerung. Wie in FIG 2 dargestellt, werden in der vorliegenden Ausgestaltung drei Sollwerte bereitgestellt, und zwar ein Beschleunigungssollwert, ein Geschwindigkeitssollwert sowie ein Positionssollwert. In alternativen Ausgestaltungen kann dies abweichen. Zu diesem Zweck weist die Steuereinheit 12 einen Beschleunigungsfilter 36 als Übertragungsfunktion des Lagesollwerts am Ausgang des Feininterpolators des Sollwertgenerators 16 zur Stellgröße des zustandsgeregelten Systemmodells 14 auf. Ferner weist die Steuereinheit 12 einen Geschwindigkeitsfilter 38 als Übertragungsfunktion des Lagesollwert am Ausgang des Feininterpolators des Sollwertgenerators 16 zur modellierten Drehzahl an der elektrischen Maschine 18 auf. Schließlich weist die Steuereinheit 12 einen Positionsfilter 40 als Übertragungsfunktion des Lagesollwert am Ausgang des Feininterpolators des Sollwertgenerators 16 zur simulierten Position am aktiven Messsystem auf.

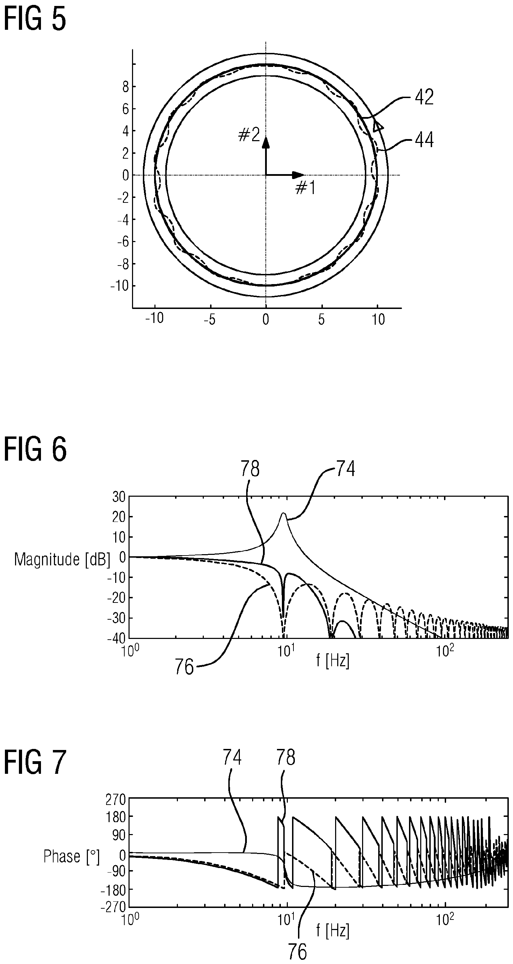

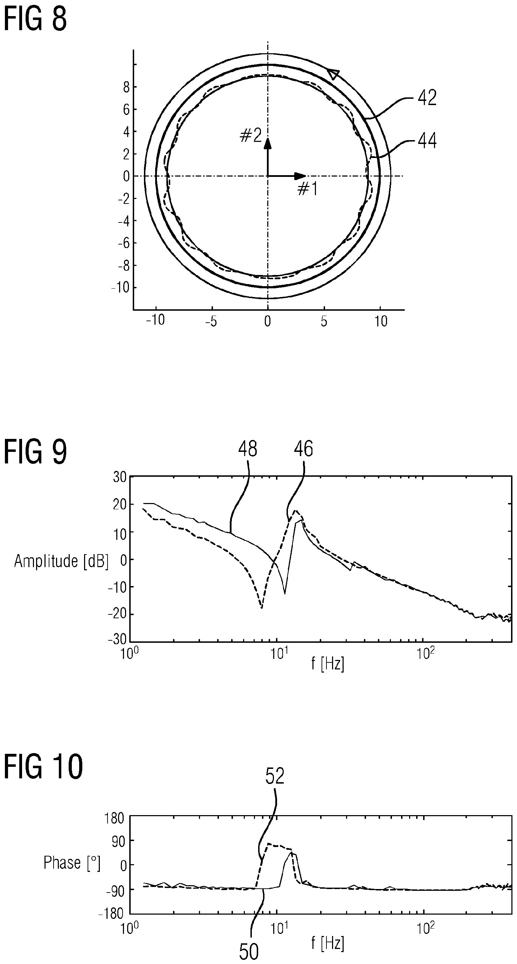

In den folgenden FIG 3 bis 8 ist die modellbasierte Vorsteuerung basierend auf der Konkretisierung gemäß FIG 2 im Vergleich zu einem herkömmlichen Tiefpassfilter als Beispiel dargestellt. Bei vergleichbarer Dämpfung von Eigenfrequenzen ist es möglich, mit der modellbasierten Vorsteuerung eine höhere Bandbreite zu erreichen. Daraus ergibt sich eine geringere Konturverletzung, die mittels eines Kreisformtests, wie in den FIG 5 und 8 dargestellt, belegt werden kann. Die FIG 3 bis 5 beziehen sich auf eine Ausführung basierend auf der anhand von FIG 2 erläuterten Vorsteuerung. Dabei stellen die FIG 3 und 4 ein Bode-Diagramm dar, wobei FIG 3 einen Amplitudenverlauf über der Frequenz und FIG 4 einen Phasenverlauf über der Frequenz zeigt. In FIG 3 zeigt ein Graph 74 einen Amplitudenverlauf einer Übertragungsfunktion eines Regelungskreises. In FIG 4 zeigt der Graph 74 einen zugehörigen Phasenverlauf. Ein Graph 76 zeigt in FIG 3 einen Amplitudenverlauf einer für die Vorsteuerfunktion genutzten Filterkennlinie. In FIG 4 zeigt der Graph 76 einen zugehörigen Phasenverlauf. Ein Graph 78 zeigt in FIG 3 einen Amplitudenverlauf einer Kopplung der Übertragungsfunktion gemäß dem Graphen 74 mit der Filterkennlinie gemäß dem Graphen 76. ZU erkennen ist, dass eine Kennlinie für einen Tiefpass erreicht werden kann. Der Graph 78 in FIG 4 zeigt einen zugehörigen Phasenverlauf. Eine den FIG 3 und 4 entsprechende Darstellung mit Graphen 74, 76, 78 für die Nutzung eines Tiefpasses zeigen die FIG 6 und 7. Zu erkennen ist, dass der Graph 78 in Fig 6 bei erheblich kleineren Frequenzen bereits abfällt. Aus Fig 7 ist ferner ersichtlich, dass bei der Nutzung eines Tiefpasses erheblich mehr Phasensprünge als bei der Vorsteuerung gemäß der FIG 3 und 4 auftreten.

Die Auswirkungen in Bezug auf den Kreisformtest sind anhand von FIG 5 ersichtlich. Mit einem Graphen 42 ist in FIG 5 ein Kreis dargestellt, der eine Sollkontur zeigt, wobei der Graph 42 einem Kreis mit einem Radius von 10 mm entspricht. Ein Graph 44 zeigt eine reale Kontur, die mit der Steuerung gemäß den Eigenschaften, wie sie in den FIG 3 und 4 dargestellt sind, realisiert ist. Die FIG 6 und 7 zeigen ein Bode-Diagramm wie die FIG 3 und 4 für eine entsprechende Tiefpassfilterung. Die mit dieser Steuerung erreichbare Qualität in Bezug auf den Kreisformtest ist in FIG 8 dargestellt. Im Vergleich zur FIG 5 ist erkennbar, dass die Abweichungen von der Sollkontur 42 in FIG 8 deutlich größer als in FIG 5 sind. Der Kreis gemäß dem Graphen 44 in FIG 8 hat einen deutlich kleineren Radius. Mit der Vorsteuerung gemäß FIG 2 ist somit eine höhere Konturgenauigkeit erreichbar.

In Bezug auf die vorhergehenden Ausführungen zur modellbasierten Vorsteuerung wurde immer ein zeitinvariantes Systemmodell 14 beziehungsweise Körperelementmodell vorausgesetzt. Damit ist es möglich, eine Vielzahl von Vorschubachsen in gewünschter Weise zu steuern. Insbesondere kann das Systemmodell 14 beziehungsweise das Körperelementmodell vom realen bestimmungsgemäßen Betrieb losgelöst sein. Das Systemmodell 10 kann beispielsweise außerhalb des bestimmungsgemäßen Betriebs oder auch in einer azyklischen Arbeitsebene der Steuerung realisiert sein. Als Ergebnis der Modellbildung können in Bezug auf FIG 2 die Eigenschaften der Filter 36, 38, 40, insbesondere Parameter für diese Filter, ein Ergebnis sein. Für die Nutzung im bestimmungsgemäßen Betrieb werden diese Filter 36 bis 40 mit zeitinvarianten Parametern beziehungsweise Koeffizienten genutzt.

Es hat sich gezeigt, dass sich das zuvor erläuterte Verfahren zumindest teilweise als ungünstig erweist, wenn eine oder mehrere Vorschubachsen positions- beziehungsweise beladungsabhängig ein stark variierendes Verhalten aufweisen. So etwas tritt beispielsweise bei Werkstückachsen oder auch bei Roboterachsen auf. Insbesondere bei Robotern kann eine jeweilige Pose sowie auch eine jeweilige mechanische Belastung beziehungsweise Beladung einen erheblichen Einfluss auf eine Dynamik einer jeweiligen Achse haben. Die FIG 9 und 10 beziehen sich auf eine Achse eines sechsachsigen Roboters. Die FIG 9 und 10 zeigen eine entsprechendes Bode-Diagramm wie die FIG 3 und 4. Mit Graphen 46, 48 sind in FIG 9 unterschiedliche Beladungen beziehungsweise Belastungen einer jeweiligen Achse dargestellt. FIG 9 zeigt mit den Graphen 46, 48 entsprechende Amplitudenverläufe für unterschiedliche mechanische Belastungen des Roboters. In FIG 10 sind mit Graphen 50, 52 die entsprechenden Phasenverläufe dargestellt. Wie sich anhand der FIG 9 und 10 ergibt, verändert sich das Verhalten der hier berücksichtigten Roboterachse mit der Pose des Roboters. Ein dynamisches Verhalten kann anhand einer Drehzahlregelstrecke, beispielsweise in Form einer Übertragungsfunktion von einem Maschinendrehmoment zu einer Maschinendrehzahl, charakterisiert sein.

Für eine Modellbildung gibt es zum Beispiel zwei Möglichkeiten. Eine Möglichkeit ist, ein eindimensionales Mehrkörpersystem zu schaffen, aus dem Zustandsmatrizen beziehungsweise Systemmatrizen abgeleitet werden können. Beispielsweise ist es möglich, eine Achse eines Roboters mit einer dominanten Schwingung als Zweimassenschwinger zu modellieren. Eine weitere Möglichkeit ist die Beschreibung des Modells durch Frequenz und Dämpfung von Polen und Nullstellen des Systems. Daraus können ebenso Zustands- beziehungsweise Systemmatrizen ermittelt werden. Die Matrizen können zum Beispiel in einer aus der Literatur bekannten Regelungsnormalform aufgestellt werden.

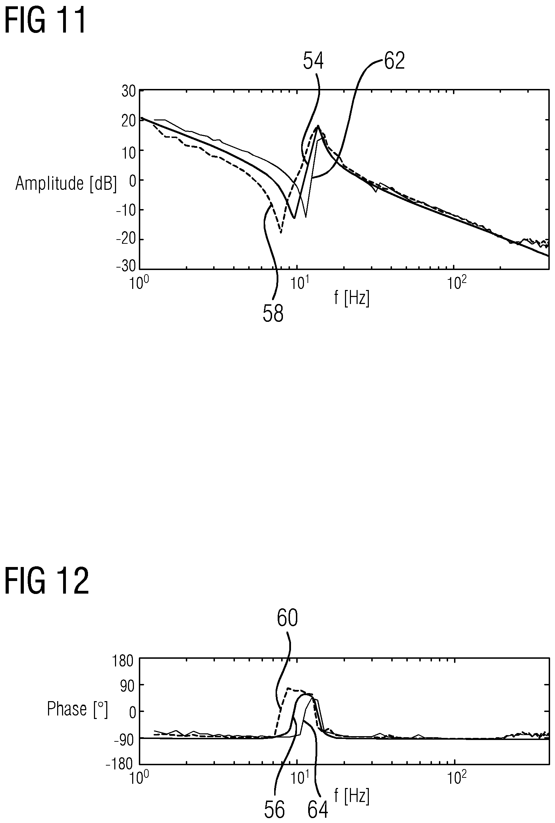

Im Stand der Technik wird in der Regel versucht, variierende Modelleigenschaften durch eine Art "mittleres" Modell zu erfassen, um möglichst alle Zustände einer Achse abdecken zu können. Die FIG 11 und 12 zeigen ein Bode-Diagramm wie die FIG 9 und 10 für eine Roboterachse. Mit Graphen 54, 56 in den FIG 11 und 12 ist eine Drehzahlstrecke dargestellt, die sich aus dem entworfenen Modell ergibt. Mit Graphen 58, 60 ist ein erster extremer Zustand der dargestellten Achse des Roboters gezeigt. Mit Graphen 62, 64 ist ein weiterer extremer Zustand dieser Achse gezeigt. Wie aus den FIG 11 und 12 ersichtlich ist, kann die erreichbare Konturgenauigkeit somit nur im Bereich der Graphen 54, 56 erreicht werden. In hiervon abweichenden Arbeitspunkten, insbesondere zum Beispiel bei abweichenden Roboterposen, kommt es, wie anhand der Graphen 58 bis 64 ersichtlich ist, zu Abweichungen, wodurch zum Beispiel der genaue Arbeitsraum des Roboters eingeschränkt ist.

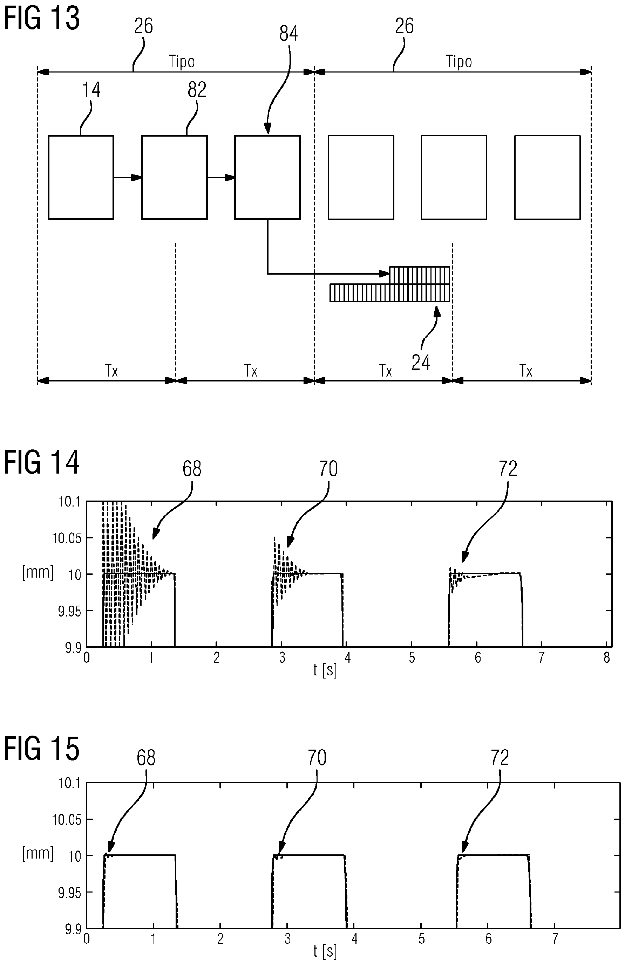

FIG 13 zeigt eine schematische Blockdarstellung eines Ablaufs einer modellbasierten Vorsteuerung, wobei Körperelementmodelle 24 jeweiliger Körperelemente 20 in Bewegungstakten aktualisiert werden. Es ist vorgesehen, dass der Modellentwurf als Teil eines zyklischen Betriebs berücksichtigt wird. Hierzu wird ein Körperelementmodell 24 der jeweiligen Achse eines Roboters beziehungsweise einer Anlage des Systems 10 erstellt und mitgeführt. Dies umfasst vorliegend unter anderem, dass insbesondere das Körperelementmodell 24, vorzugsweise im Wesentlichen in Echtzeit, für eine jeweilige aktuelle Pose neu bestimmt wird. Das Körperelementmodell 24 wird um eine Belastung der jeweiligen Achse beziehungsweise der Kinematik erweitert. Eigenschaften der Belastung können zum Beispiel von einem Nutzer des Systems 10 vorgegeben werden. Sie können alternativ oder ergänzend jedoch auch von der Steuereinheit 12 selbsttätig ermittelt und entsprechend berücksichtigt werden. FIG 13 bezieht sich auf die Anwendung des Verfahrens an einem Roboter. Hierzu kann zum Beispiel ein dreidimensionales Mehrkörpermodell herangezogen werden. Der Vorteil dieses Modellierungsansatzes ist, dass das Körperelementmodell 24 mit geringem Aufwand zyklisch neu berechnet beziehungsweise bestimmt werden kann. Bei einer Neuberechnung des Körperelementmodells 24 können unter anderem eine neue Position eines Schwerpunktes des jeweiligen Körperelements 20 sowie auch eine neue Gestalt eines Trägheitstensors des jeweiligen Körperelements 20 berücksichtigt werden.

Weil ein Entwurf eines Zustandsreglers für ein mehrdimensionales Systemmodell sehr rechenintensiv und für einen zyklischen Betrieb einer handelsüblichen CNC-Steuerung nicht unbedingt geeignet ist, ist vorliegend vorgesehen, dass das Systemmodell auf dominante Eigenschaften reduziert und gegebenenfalls einzelne Achsen des Roboters voneinander entkoppelt werden. Dadurch ist es möglich, eine achsweise beziehungsweise körperelementmodellweise Gestaltung zu realisieren, wobei ein jeweiliges Körperelementmodell 24 gegenüber dem Systemmodell erheblich reduziert ist.

Darüber hinaus ist es möglich, dass, wenn eine starke Überkopplung zwischen mehreren Achsen auftritt, diese ebenso berücksichtigt werden kann. Trotzdem kann hierbei der Rechenaufwand reduziert werden, indem nämlich ein Überkoppeln lediglich paarweise für ein jeweiliges Achsenpaar berücksichtigt wird.

Aus FIG 13 ist ersichtlich, wie ein Verfahrensablauf gestaltet sein kann. Die auszuführende Bewegung der Körperelemente 20 ist in zeitlich aufeinanderfolgende Bewegungstakte 26 gegliedert, die vorliegend eine zeitliche äquidistante Erstreckung aufweisen. Im Bewegungstakt 26 wird das Systemmodell 14 für eine aktuelle Pose bestimmt. In einem darauffolgenden Schritt 82 findet eine Modellreduktion statt, sodass einzelne Körperelementmodelle 24 bestimmt werden. In einem Schritt 84 erfolgt dann das Bestimmen der Körperelementmodelle 24. Hierzu können Parameter beziehungsweise Filterkoeffizienten bestimmt werden. Anschließend werden die Parameter beziehungsweise Filterkoeffizienten für den folgenden Bewegungstakt 26 zur Verfügung gestellt. Hier wird dann das jeweilige Filter aus den jeweiligen Filterkoeffizienten beziehungsweise Parametern und einem entsprechenden Speicher mit jeweiligen Betriebswerten berechnet beziehungsweise bestimmt.

Das anhand von FIG 13 erläuterte Verfahren unterscheidet sich von den vorhergehend erläuterten Verfahren dadurch, dass das Systemmodell 10 beziehungsweise die Körperelementmodelle 24 mitgeführt werden und als Teil eines zyklischen Betriebs für eine jeweilige Pose des Roboters beziehungsweise eine Beladung des Roboters neu bestimmt werden. Darüber hinaus erlaubt es die Modellreduktion, auch komplexere Modelle in Echtzeit einer CNC-Steuerung zu bestimmen. In Bezug auf einen Roboter erweist es sich als vorteilhaft, dass die Erfindung dem Roboter im gesamten Arbeitsraum eine deutliche Steigerung eines jeweiligen Achs-Rucks bei verminderten Schwingungsamplituden und höherer Konturgenauigkeit ermöglicht. Dies wird nicht nur in einer einzigen spezifischen Pose beziehungsweise einem einzigen spezifischen Arbeitspunkt erreicht, sondern über einen weiten Betriebsbereich. Dies zeigen die FIG 14 und 15.

FIG 14 zeigt eine schematische Diagrammdarstellung in Bezug auf das Einnehmen von Positionen abhängig von der Zeit bei drei verschiedenen Rucken einer Roboterachse mit einer Vorsteuerung gemäß FIG 1. In einem Bereich 68 sind die Auswirkungen eines Rucks dargestellt, und zwar mit einem Parameter von 50 m/s³. In einem Bereich 70 ist ein weiterer Ruck mit dem Parameter 30 m/s³ dargestellt. Im einem Bereich 72 ist ein weiterer Ruck mit einem Parameter 6 m/s³ dargestellt. Zu erkennen ist, dass der jeweilige Ruck 68, 70, 72 in Bezug auf die Position jeweils eine Schwingung auslöst. Dies ist für die Verfahrensführung, insbesondere die Genauigkeit ungünstig beziehungsweise unerwünscht.

FIG 15 zeigt in einer schematischen Diagrammdarstellung wie FIG 14 die Situation in Bezug auf das Einnehmen von Positionen abhängig von der Zeit bei den drei unterschiedlichen Rucken wie FIG 14 mit einer Vorsteuerung gemäß FIG 1, wobei die Körperelementmodelle 24 der Körperelemente beziehungsweise Achsen in den Bewegungstakten 26 jeweils aktualisiert werden. Zu erkennen ist, dass in Bereichen 68, 70, 72 das Schwingungsverhalten der durch den jeweiligen Ruck ausgelösten Positionsveränderung erheblich reduziert ist. Mit der Erfindung ist es daher möglich, die Konturgenauigkeit erheblich zu verbessern.

Die Ausführungsbeispiele dienen ausschließlich der Erläuterung der Erfindung und sollen diese nicht beschränken.

## Patentansprüche

1. Verfahren zum Betreiben eines Systems (10) mit mehreren Körperelementen (20), die bewegbar miteinander verbunden sind, wobei wenigstens ein erstes der Körperelemente (20) mittels einer ersten Antriebseinheit (18) bewegt wird, die das wenigstens eine erste Körperelement (20) abhängig von einem ersten Antriebssignal einer Steuereinheit (12) bewegt, wobei die Steuereinheit (12) ausgehend von einem ersten Zustand des ersten Körperelements (20) einen zweiten Zustand des ersten Körperelements (20) bestimmt, den erste Körperelement (20) während eines Bewegungstakts (26) erreichen soll, wobei die Steuereinheit (12) das erste Antriebssignal basierend auf einem Körperelementmodell (24) für das erste Körperelement (20) ermittelt, um das erste Körperelement (20) mittels der ersten Antriebseinheit (18) während des Bewegungstakts (26) vom ersten Zustand in den zweiten Zustand zu bewegen,
**dadurch gekennzeichnet, dass**
das Körperelementmodell (24) abhängig von einer mechanischen Belastung des ersten Körperelements (20) in dem jeweiligen Bewegungstakt (26) aktualisiert wird.

2. Verfahren nach Anspruch 1, **dadurch gekennzeichnet, dass** das Körperelementmodell (24) für jeden Bewegungstakt (26) oder jeweils einem Vielfachen des Bewegungstakts (26) aktualisiert wird.

3. Verfahren nach einem der vorhergehenden Ansprüche, **dadurch gekennzeichnet, dass** das erste Antriebssignal für einen jeweiligen Bewegungstakt (26) abhängig von dem jeweils für diesen Bewegungstakt (26) aktualisierten Körperelementmodell (24) ermittelt wird.

4. Verfahren nach einem der vorhergehenden Ansprüche, **dadurch gekennzeichnet, dass** die mechanische Belastung abhängig von einer Kraftwirkung eines zweiten der Körperelemente bestimmt wird, welches unmittelbar mit dem ersten Körperelement (20) mechanisch gekoppelt ist.

5. Verfahren nach Anspruch 4, **dadurch gekennzeichnet, dass** zweite Körperelement mittels einer zweiten Antriebseinheit bewegt wird, die das zweite Körperelement abhängig von einem zweiten Antriebssignal der Steuereinheit (12) bewegt.

6. Verfahren nach einem der vorhergehenden Ansprüche, **dadurch gekennzeichnet, dass** die mechanische Belastung zumindest abhängig von wenigstens einer Beschleunigung des ersten Körperelements (20), einer Masse des ersten Körperelements (20), einem Schwerpunkt des ersten Körperelements (20), einer Steifigkeit des ersten Körperelements (20), wenigstens einer Pose des ersten Körperelements (20) in Verbindung mit wenigstens einem weiteren Körperelement oder wenigstens einer Kraft, die aufgrund einer Kopplung des ersten Körperelements (20) mit einem weiteren Körperelement auf erste Körperelement (20) einwirkt, bestimmt wird.

7. Verfahren nach einem der vorhergehenden Ansprüche, **dadurch gekennzeichnet, dass** ein Übergang vom ersten Zustand in den zweiten Zustand während des Bewegungstakts (26) zumindest teilweise mittels einer Trajektorie vorgegeben wird, wobei die Steuereinheit (12) das Antriebssignal ergänzend zumindest abhängig von der Trajektorie ermittelt.

8. Verfahren nach einem der vorhergehenden Ansprüche, **dadurch gekennzeichnet, dass** das Verfahren für einen jeweiligen Bewegungstakt (26) für wenigstens zwei Körperelemente des Systems (10) durchgeführt wird.

9. Steuereinheit (12) zum Betreiben eines Systems (10) mit mehreren Körperelementen (20), die bewegbar miteinander verbunden sind, wobei wenigstens ein erstes der Körperelemente (20) mittels einer ersten Antriebseinheit (18) bewegbar ist, wobei die Steuereinheit (12) ausgebildet ist, das wenigstens zum Bewegen des ersten Körperelements (20) des Systems (10) ein erstes Antriebssignal bereitzustellen, wobei die Steuereinheit (12) ausgebildet ist, ausgehend von einem ersten Zustand des ersten Körperelements (20) einen zweiten Zustand des ersten Körperelements (20) zu bestimmen, den erste Körperelement (20) während eines Bewegungstakts (26) erreichen soll, wobei die Steuereinheit (12) ausgebildet ist, das erste Antriebssignal basierend auf einem Körperelementmodell (24) für das erste Körperelement (20) zu ermitteln, um das erste Körperelement (20) mittels der ersten Antriebseinheit (18) während des Bewegungstakts (26) vom ersten Zustand in den zweiten Zustand zu bewegen,
**dadurch gekennzeichnet, dass**
die Steuereinheit (12) ausgebildet ist, das Körperelementmodell (24) abhängig von einer mechanischen Belastung des ersten Körperelements (20) in dem jeweiligen Bewegungstakt (26) zu aktualisieren.

10. System (10) mit mehreren Körperelementen (20), die bewegbar miteinander verbunden sind, und der Steuereinheit (12) zumindest zum Bereitstellen eines ersten Antriebssignals, wobei wenigstens ein erstes der Körperelemente (20) mittels einer ersten Antriebseinheit (18) bewegbar ist, die das erste Körperelement (20) abhängig vom ersten Antriebssignal der Steuereinheit (12) bewegt,
**dadurch gekennzeichnet, dass**
die Steuereinheit (12) gemäß Anspruch 9 ausgebildet ist.
